# EUROPEAN PATENT SPECIFICATION

(11) **EP 2 969 458 B1**
(45) Date of publication and mention of the grant of the patent: **24.11.2021**
(21) Application number: 14712919.1
(22) Date of filing: 05.03.2014
(51) Int. Cl.: B29C 45/14, B60G 7/04, B60G 11/54, F16F 1/12

(54) **METHOD OF OVERMOLDING A POLYMERIC MATERIAL ONTO A MICROCELLULAR POLYURETHANE AND AN ARTICLE MADE THEREFROM**
VERFAHREN ZUM UMSPRITZEN EINES MIKROZELLULÄREN POLYURETHANS MIT EINEM POLYMER UND DADURCH HERGESTELLTER ARTIKEL
PROCÉDÉ DE SURMOULAGE PAR INJECTION UNE MATIÈRE POLYMÈRE SUR UN POLYURÉTHANE MICROCELLULAIRE ET PIÈCE OBTENUE PAR CE PROCÉDÉ

(30) Priority: 15.03.2013 US 201361791901 P; 15.03.2013 US 201361794267 P
(43) Date of publication of application: 20.01.2016
(73) Proprietor: BASF SE, 67056 Ludwigshafen am Rhein (DE)
(72) Inventor: AL-DAHHAN, Sadiq, Dearborn, MI 48126 (US); BHOSALE, Ankur, Canton, MI 48188 (US); HUPRIKAR, Anand, Novi, MI 48375 (US)
(74) Representative: BASF IP Association
(86) International application number: PCT/US2014/020589
(87) International publication number: WO 2014/149730

(56) References cited:
- EP-A2- 0 778 166
- WO-A1-98/34045
- WO-A1-03/014403
- JP-A- S5 743 847
- JP-A- S6 335 322
- JP-A- H01 249 312
- US-A1- 2006 082 038
- US-A1- 2009 127 043
- US-A1- 2011 266 729
- None

## Description

### RELATED APPLICATIONS

### BACKGROUND OF THE INVENTION

### 1. Field of the Invention

The subject invention relates generally to methods of overmolding a polymeric material onto a microcellular polyurethane and an article made therefrom.

### 2. Description of the Related Art

Articles made from separate components made from a polymeric material and microcellular polyurethane are known in the art. Typically, the component made from the polymeric material is coupled to the component made from the microcellular polyurethane with an adhesive. However, over time, the adhesive has a tendency to fail resulting in the components separating from each other. For example, when the article is a dampening device used with a suspension system of a vehicle, the dampening device is compressible for absorbing loads. However, repeated compression of the dampening device can result in a walking-out or separation between the component made from the polymeric material and the component made from microcellular polyurethane. Therefore, there remains a need to provide an improved article that comprises separate components made from the polymeric material and microcellular polyurethane. A method for producing a dampening device is for example known from WO98/34045 A1.

### SUMMARY OF THE INVENTION AND ADVANTAGES

The invention is defined by a method according to claim 1 and a dampening device according to claim 6. Preferred embodiments are defined in the dependent claims.

### BRIEF DESCRIPTION OF THE DRAWINGS

Other advantages of the present invention will be readily appreciated, as the same becomes better understood by reference to the following detailed description when considered in connection with the accompanying drawings wherein:

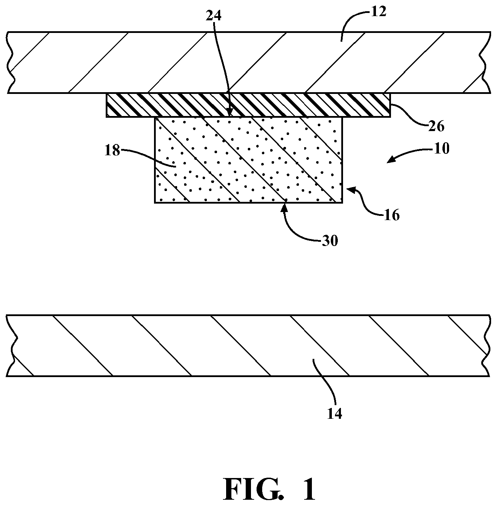

Figure 1 is a cross-sectional view of an article shown as a dampening device between a first component and a second component;
Figure 2 is a schematic perspective view of one embodiment of the dampening device, which include a bumper;
Figure 3 is a cross-section view of a portion of the dampening device of Figure 2; and
Figure 4 is a cross-sectional view of one embodiment of the dampening device shown as a spring isolator.

### DETAILED DESCRIPTION

The present invention generally relates to a method of making an article. The article is generally formed by overmolding a polymeric material around a microcellular polyurethane. More specifically, a substrate comprising the microcellular polyurethane is directly connected to the polymeric material of an overmolded element.

Generally, microcellular polyurethane has a microcellular structure, i.e., the microcellular polyurethane presents cell walls defining cells, or void space. The cell walls have an original shape and the cells are generally filled with air. When the microcellular polyurethane is subjected to compressive forces, the cell walls are collapsed and air evacuates from the cells. When the compressive forces are removed, the cell walls return to the original shape. The use of microcellular urethane in compression application is beneficial because the microcellular polyurethane has a progressive load deflection curve, i.e., characteristic.

An example of a suitable microcellular polyurethane for this application is the type manufactured by BASF Corporation under the trade name Cellasto®. The microcellular polyurethane is formed from a two-step process. In the first step of the process, an isocyanate prepolymer is formed by reacting a polyol and an isocyanate. The polyol is polyester, and alternatively is polyether. The isocyanate is monomeric methyldiphenyl diisocyanate, and alternatively is naphthalene diisocyanate. However, it should be appreciated that the isocyanate can be of any type without departing from the nature of the present invention. In the second step of the process, the isocyanate prepolymer reacts with water to generate carbon dioxide and the carbon dioxide forms the cells of the microcellular polyurethane.

For example, polyester polyols are produced from the reaction of a dicarboxylic acid and a glycol having at least one primary hydroxyl group. For example, dicarboxylic acids that are suitable for producing the polyester polyols are selected from the group of, but are not limited to, adipic acid, methyl adipic acid, succinic acid, suberic acid, sebacic acid, oxalic acid, glutaric acid, pimelic acid, azelaic acid, phthalic acid, terephthalic acid, isophthalic acid, and combinations thereof. For example, glycols that are suitable for producing the polyester polyols are selected from the group of, but are not limited to, ethylene glycol, butylene glycol, hexanediol, bis(hydroxymethylcyclohexane), 1,4-butanediol, diethylene glycol, 2,2-dimethyl propylene glycol, 1,3-propylene glycol, and combinations thereof. The polyester polyol has a hydroxyl number of from 30 to 130, a nominal functionality of from 1.9 to 2.3, and a nominal molecular weight of from 1000 to 3000. Specific examples of polyester polyols suitable for the subject invention include Pluracol® Series commercially available from BASF Corporation of Florham Park, NJ.

For example, polyether polyols are produced from the cyclic ether propylene oxide, and alternatively ethylene oxide or tetrahydrofuran. Propylene oxide is added to an initiator in the presence of a catalyst to produce the polyester polyol. Polyether polyols are selected from the group of, but are not limited to, polytetramethylene glycol, polyethylene glycol, polypropylene glycol, and combinations thereof. The polyether polyol has a hydroxyl number of from 30 to 130, a nominal functionality of from 1.8 to 2.3, and a nominal molecular weight of from 1000 to 5000. Specific examples of polyether polyols suitable for the subject invention include Pluracol® 858, Pluracol® 538, Pluracol® 220, Pluracol® TP Series, Pluracol® GP Series, and Pluracol® P Series commercially available from BASF Corporation of Florham Park, NJ.

For example, diisocyanates are selected from the group of, but are not limited to, 4,4'-diphenylmethane diisocyanate, 2,4'-diphenylmethane diisocyanate, ethylene diisocyanate, ethylidene diisocyanate, propylene diisocyanate, butylene diisocyanate, cyclopentylene-1,3-diisocyanate, cyclohexylene-1,4-diisocyanate, cyclohexylene-1,2-diisocyanate, 2,4-toluylene diisocyanate, 2,6-toluylene diisocyanate, 2,2-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulfone-4,4'-diisocyanate, dichlorohexamethylene diisocyanate, tetramethylene diisocyanate, pentamethylene diisocyanate, hexamethylene diisocyanate, 1-chlorobenzene-2,4-diisocyanate, furfurylidene diisocyanate, and combinations thereof. Specific examples of diisocyanates suitable for the subject invention include Lupranate® 5143, Lupranate® MM103, and Lupranate® R2500U commercially available from BASF Corporation of Florham Park, NJ.

The monomeric methyldiphenyl diisocyanate is selected from the group of 4,4'-diphenylmethane diisocyanate, 2,4'-diphenylmethane diisocyanate, and combinations thereof. Specific examples of monomeric methyldiphenyl diisocyanates suitable for the subject invention include Lupranate® M and Lupranate® MS commercially available from BASF Corporation of Florham Park, NJ. The monomeric methyldiphenyl diisocyante may also be modified with carbonimide. Specific examples of carbonimide-modified monomeric methyldiphenyl diisocyante include Lupranate® 5143 and Lupranate® MM103 commercially available from BASF Corporation of Florham Park, NJ.

The polymeric material may be selected from the group of thermoplastic materials, thermoset materials, engineered plastics, and combinations thereof. In various embodiments utilizing the thermoplastic material as the polymeric material, the thermoplastic material may be a thermoplastic elastomer (i.e., a "TPE"). Examples of suitable TPEs include those with or without cross-linking. In various embodiments utilizing the TPE as the polymeric material, the TPE is selected from the group of thermoplastic polyurethanes, thermoplastic etheresters, thermoplastic olefins, thermoplastic styrols, thermoplastic etheramides, and combinations thereof.

In specific embodiments utilizing the thermoplastic material as the polymeric material, the thermoplastic material is the thermoplastic polyurethane, which may also be referred to in the art as a "TPU". Alternatively, in various embodiments utilizing the thermoplastic material as the polymeric material, the thermoplastic material may be a polyamide. The polyamide may be elstomeric or non-elastomertic. Examples of suitable polyamides include PA 6, PA 6,6, and combinations thereof. The thermoplastic material of the overmolded element is typically selected to be compatible with injection molding processes. Specific examples of a suitable thermoplastic polyurethane include Elastollan® commercially available from BASF Corporation of Florham Park, NJ.

As indicated above, in various embodiments the polymeric material can be a thermoset material. Examples of suitable thermoset materials include polyester fiberglass systems, polyurethanes, vulcanized rubber, unvulcanized rubber, phenol formaldehyde resins, resin plastics reinforced with fibers, such as duroplast, melamine resin, melamine formaldehyde, epoxy resin, polyimides, cyanate esters, polycyanurates, and combinations thereof.

As indicated above, in various embodiments the polymeric material can be an engineered plastic. Examples, of suitable engineered plastics include ultra-high-molecular-weight polyethylene (UHMWPE), polytetrafluoroethylene (PTFE / Teflon), acrylonitrile butadiene styrene (ABS), polycarbonates (PC), polyamides (PA), polybutylene terephthalate (PBT), polyethylene terephthalate (PET), polyphenylene oxide (PPO), polysulphone (PSU), polyetherketone (PEK), polyetheretherketone (PEEK), polyimides (PI), polyphenylene sulfide (PPS), polyoxymethylene plastic (POM / Acetal).

The polymeric material may include an additive. Suitable additives include, but are not limited to, non-fiber impact modifiers, fiber-based impact resistance additives, coupling agents, pigments, glass or carbon fibers, mineral or glass beads, stabilizers, and combinations thereof. Although not required, the polymeric material may be filled with fibers in an amount greater than 10, from 10 to 75, from 10 to 70, from 10 to 60, from 10 to 50, from 10 to 40, from 10 to 30, from 15 to 75, from 15 to 70, from 15 to 65, from 15 to 60, from 15 to 55, from 15 to 50, from 15 to 45, from 15 to 40, from 15 to 35, from 15 to 30, from 20 to 75, from 20 to 70, from 20 to 65, from 20 to 60, from 20 to 55, from 20 to 50, from 20 to 45, from 20 to 40, from 20 to 35, from 20 to 30, from 25 to 75, from 25 to 70, from 25 to 65, from 25 to 60, from 25 to 55, from 25 to 55, from 25 to 50, from 25 to 45, from 25 to 40, from 25 to 35, from 25 to 30, from 30 to 75, from 30 to 70, from 30 to 65, from 30 to 60, from 30 to 55, from 30 to 50, from 30 to 45, from 30 to 40, from 30 to 35, from 35 to 75, from 35 to 70, from 35 to 65, from 35 to 60, from 35 to 55, from 35 to 50, from 35 to 45, from 35 to 40, from 40 to 75, from 40 to 70, from 40 to 65, from 40 to 60, from 40 to 55, from 40 to 50, from 40 to 45, from 45 to 75, from 45 to 70, from 45 to 65, from 45 to 60, from 45 to 55, from 45 to 50, from 50 to 75, from 50 to 70, from 50 to 65, from 50 to 60, from 50 to 55, from 55 to 75, from 55 to 70, from 55 to 65, from 55 to 60, from 60 to 75, from 60 to 70, from 60 to 65, from 65 to 75, and from 65 to 70 percent weight based on a combined total weight of the polymeric material and the fibers. Typically, the fibers are glass fibers; however it should be appreciated that the fibers may include other material or other materials in combination with glass. The fibers may vary in size (e.g. length, diameter, etc.) and may be coated or uncoated. The polymeric material or the fibers may each include other components to encourage bonding between the polymeric material and the fibers.

The method includes the step of providing a substrate comprising the microcellular polyurethane. The substrate is placed into a mold. The mold includes a main cavity and a main core. The main cavity and the main core are moveable relative to each other between a closed position for securing the substrate within the mold and an open position for removal of the article from the mold. Therefore, the method may further include the steps moving the mold to the open position, prior to the step of placing the substrate into the mold, and then moving the mold to the closed position once the substrate is placed within the mold. The mold may include features to ensure proper location of the substrate in the mold. For example, the mold can include locating holes, draft angles, etc. Additionally, the mold may be treated with a release agent before the substrate is placed in the mold to promote separation of the article from the mold.

The polymeric material of the overmolded element is typically selected to be compatible with molding processes described below. The polymeric material is introduced into the mold. In one embodiment, the polymeric material is injected into the mold. It is to be appreciated that other methods besides injection molding could be used, such as reactive injection molding, extrusion molding, compressive molding, cast molding, spin casting, and vulcanization. When vulcanization is employed, the polymeric material and the microcellular polyurethane are fused together. The polymeric material is disposed over a receiving surface of the substrate within the mold to form the overmolded element, which is coupled to the substrate thereby making the article. The polymeric material for the overmolded element may be heated to a molten state with the polymeric material for the overmolded element applied to the receiving surface of the substrate in the molten state. Subsequently, the polymeric material is allowed to cool and solidify thereby forming the overmolded element. The article is then released from the mold.

Typically, the step of heating the polymeric material and injecting the polymeric material into the mold is further defined as molding. In such a configuration, the polymeric material is typically injected into the mold under pressure.

The method may further include the step of promoting interaction between the polymeric material of the overmolded element and the microcellular polyurethane of the substrate to integrate the overmolded element and the substrate. The step of promoting the interaction between the polymeric material of the overmolded element and the microcellular polyurethane of the substrate combines the polymeric material and the substrate into a single unit. In other words, when the polymeric material in the molten state is introduced into contact with the substrate, the polymeric material of the overmolded element and the microcellular polyurethane of the substrate interact with one another such that upon cooling, the overmolded element and the substrate are integral with each other, i.e., one-piece.

Generally, the cells of the microcellular polyurethane of the substrate receives the polymeric material of the overmolded element to mechanically engage the overmolded element to the substrate. As alluded to above, the overmolded element is typically formed by molding the polymeric material about the substrate. During this process, the polymeric material of the overmolded element is in a molten state and flows into the cells of the microcellular polyurethane of the substrate such that, upon solidification of the polymeric material of the overmolded element, the overmolded element and the substrate are mechanically engaged with one another. It is to be appreciated that the overmolded element and the substrate can be mechanically engaged with one another in any fashion. For example, the substrate could define other features such as studs, hooks, etc.

It is also to be appreciated that a melt bond may be formed between the polymeric material of the overmolded element and the microcellular polyurethane of the substrate. Melt bonding occurs when the polymeric material of the overmolded element in the molten state interacts with the microcellular polyurethane of the substrate while the microcellular polyurethane is in a heated softened state. The polymeric material of the overmolded element and the microcellular polyurethane of the substrate interact with one another such that upon cooling the polymeric material of the overmolded element and the microcellular polyurethane of the substrate are bonded together. Specifically, heat may be transferred from the polymeric material of the overmolded element in molten state to the microcellular polyurethane of the substrate. The heat softens the microcellular polyurethane and the softened microcellular polyurethane interacts with the polymeric material in the molten state. As the polymeric material cools to solidify and form the overmolded element, the soften microcellular polyurethane also cools and hardens forming a bond with the polymeric material of the overmolded element.

In addition to heat transfer from the polymeric material of the overmolded element, the softening of the microcellular polyurethane of the substrate may be promoted in a variety of ways. For example, the method may include the step of softening the microcellular polyurethane by heating the mold to conductively heat the substrate. The substrate may be heated such that less heat energy is required from the polymeric material of the body in the molten state to soften the microcellular polyurethane. Alternatively, or in addition, the method may include heating the substrate prior to disposing the polymeric material of the overmolded element in the molten state into contact with the substrate. For example, the method may include heating the substrate prior to placing the substrate into the mold. Alternatively or in addition, the method may include the step of heating the substrate while the substrate is disposed in the mold. It is to be appreciated that the mold and/or the substrate can be heated in a suitable manner, such as applying heated air to the mold and/or substrate.

The method may also include the step of preparing the receiving surface of the substrate prior to the step of injecting the polymeric material into the mold. For example, the receiving surface of the substrate can be prepared by removing a skin of the substrate for exposing cells of the substrate at the receiving surface. Additionally, the receiving surface of the substrate can be prepared by removing a portion of the substrate to expose the cells of the substrate at the receiving surface. Furthermore, the receiving surface of the substrate can be prepared by machining the substrate to expose the cells of the substrate at the receiving surface.

Typically, after forming the microcellular polyurethane, an outer surface of the microcellular polyurethane forms a skin. The skin limits access to the cells of the microcellular polyurethane at the outer surface. The skin may be the result of exposure of the microcellular polyurethane to air and/or ultraviolent light. Therefore, the receiving surface of the substrate is typically prepared for exposing the cells of the microcellular polyurethane to ensure interaction of the polymeric material with the cells of the microcellular polyurethane. Said differently, the skin of the microcellular polyurethane is removed prior to overmolding the polymeric material around the microcellular polyurethane. Additionally, the preparation of the receiving surface of the substrate may also remove any of the release agent, which was applied to the mold, that might have contacted the substrate and been disposed on the receiving surface of the substrate.

It is to be appreciated that the method may further include the step of cutting the substrate to provide the receiving surface. For example, the substrate can be cut from a stock piece of material for providing the substrate and also for exposing the cells of the substrate. For example, when the substrate has a ring-shaped configuration, the substrate can be cut from a cylinder comprising the microcellular polyurethane. In such an example, cutting the cylinder to form the substrate having the ring-shaped configuration results in a cut surface of the substrate, which has the cells of the microcellular polyurethane exposed. Therefore, the cut surface of the substrate would be the receiving surface for receiving the polymeric material within the mold.

Referring to the Figures, wherein like numerals indicate like or corresponding parts throughout the several views, the article is shown as a dampening device 10. Generally, the dampening device 10 prevents a first component 12 and a second component 14 from directly impacting each other. In one embodiment, the dampening device 10 is used with a suspension system of a vehicle. In such an embodiment, the dampening device 10 minimizes a transfer of impact forces experienced by the wheels of the vehicle to the frame of the vehicle and, ultimately, to occupants within the vehicle.

The dampening device 10 comprises a bumper 16. The bumper 16 comprises the microcellular polyurethane. Microcellular polyurethane provides several advantages over alternative materials used in bumpers. Specifically, when the bumper 16 is formed of microcellular polyurethane and subjected to compressive forces, the cell walls are collapsed and air evacuates from the cells and the bumper 16 is thereby deformed. When the compressive forces are removed from the bumper 16, the cell walls return to the original shape and the bumper 16 thereby regains its form. Because the cell walls collapse when subject to compressive forces, the bumper 16 experiences minimal bulge when compressed. In addition, at relatively low loads the bumper 16 compresses and absorbs energy. Because the cell walls are collapsing as the load increases, the bumper 16 becomes less compressible. When the cell walls are completely collapsed, the bumper 16 is not compressible.

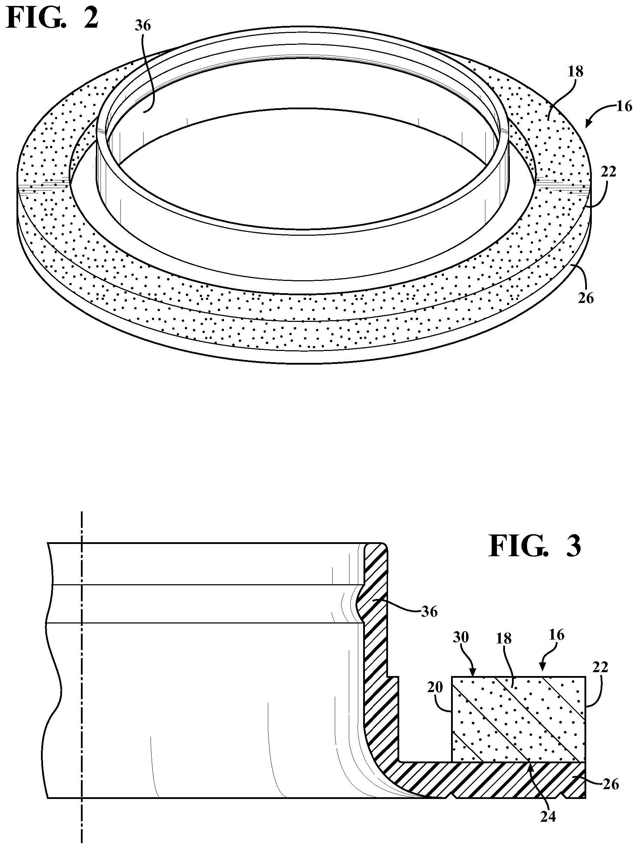

The bumper 16 has a body portion 18. As shown in Figures 2 and 3, the body portion 18 may present a ring-shaped configuration defining an inner diameter 20 and an outer diameter 22. Said differently, the bumper 16 may be donut shaped. However, it is to be appreciated that the bumper 16 can be of any suitable configuration. The bumper 16 has the receiving surface 24 as described above with reference to the article. An overmolded mounting flange 26 is coupled directly to the receiving surface 24 of the bumper 16. For example, the receiving surface 24 of the bumper 16 may be free of adhesive between the bumper 16 and the overmolded mounting flange 26.

By eliminating the use of adhesives to couple the overmolded mounting flange 26 to the bumper 16, the method of making the dampening device 10 has a quicker cycle time as compared to methods which would require a step of applying the adhesive. Additionally, the mechanical and/or melt bond between the microcellular polyurethane of the bumper 16 and the polymeric material of the overmolded mounting flange 26 is stronger than a bond of currently used adhesives. For example, with known dampening devices using adhesives, repeated compression of the bumper can result in a failure of the adhesive, which results in a walking-out or separation of the flange with the bumper occur more frequently than with the method described above.

Generally, the overmolded mounting flange 26 is used to couple the bumper 16 to the vehicle. For example, the overmolded mounting flange 26 may be coupled to the frame of the vehicle thereby coupling the bumper 16 to the frame of the vehicle as well. The overmolded mounting flange 26 comprises the polymeric material. Making the overmolded mounting flange 26 from the polymeric material provides the bumper 16, which comprises microcellular polyurethane, additional rigidity and support. Therefore, the overmolded mounting flange 26 can secure the bumper 16 is the proper position while the bumper 16 is free to be compressed.

As indicated above, the dampening device 10 can be any suitable structure for absorbing loads between the first and second components 12, 14. Examples of suitable dampening devices 10 include spring isolators, jounce bumpers, vibration dampening mounts for vibration sensitive equipment (avionics), engine mounts for NVH reduction, and bump stops.

When the article is the dampening device 10, the bumper 16 is placed into the mold and the polymeric material is injected into the mold and over the receiving surface 24 of the bumper 16 to form an overmolded mounting flange 26, which is coupled to the substrate thereby making the dampening device 10. The dampening device 10 is released from the mold.

It is to be appreciated that when the article is the dampening device 10, the method steps described above describing the method of making article also apply to the method of making the dampening device 10. For example, the method of making the dampening device 10 may include the step of preparing the receiving surface 24 of the bumper 16 prior to the step of injecting the polymeric material into the mold. Additionally, the method steps for preparing the receiving surface 24 of the article also apply to preparing the receiving surface 24 of the dampening device 10. For example, when the article is the dampening device 10, the step of preparing the receiving surface 24 of the bumper 16 may be further defined as removing a skin of the bumper 16 to expose the cells of the bumper 16 at the receiving surface 24.

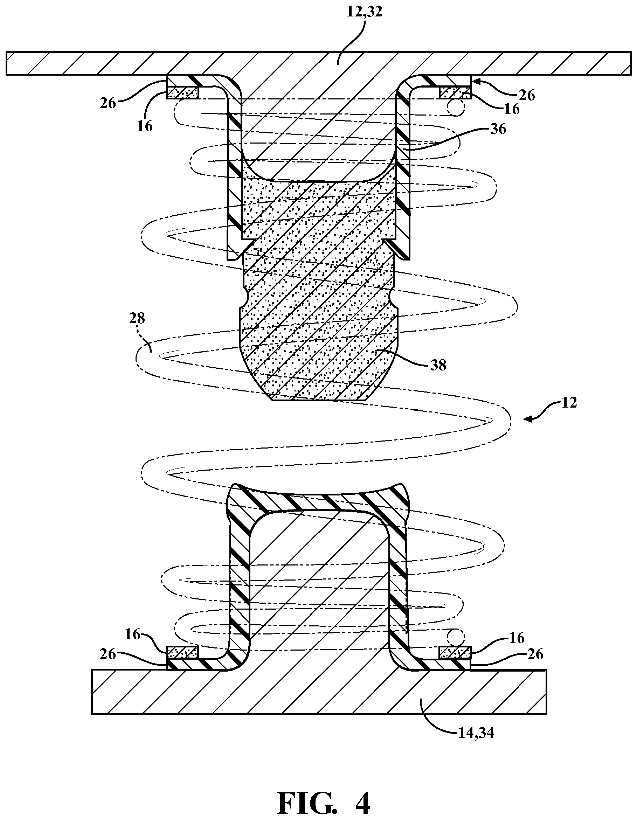

As shown in Figures 2-4, the dampening device 10 may be a spring isolator. More specifically, the bumper 16 of the dampening device 10 may be the spring isolator. In such an embodiment, the suspension system includes a coil spring 28 separating the first component 12 and the second component 14. As the second component 14 moves toward the first component 12, the coil spring 28 is compressed. As the coil spring 28 is compressed, the coil spring 28 resist the movement of the second component 14. However, if the coil spring in sin direct contact with the first and second components 12, 14, road noise can be transferred to a passenger compartment of the vehicle.

The bumper 16 also includes a contact surface 30 opposite the receiving surface 24 and adapted to contact the second component 14. When the bumper 16 is a spring isolator, the contact surface 30 is adapted to contact the coil spring 28 of the suspension system for preventing the coil spring 28 from directly contacting the first and second components 12, 14 of the vehicle. In such an embodiment, the first component 12 is further defined as a first spring seat 32 and the second component 14 is further defined as a second spring seat 34. The coil spring 28 extends between the first spring seat 32 and the second spring seat 34.

The bumper 16 isolates noise and dampens vibrations from the coil spring 28. Specifically, because the bumper 16 made from the microcellular polyurethane is more compressible than the overmolded mounting flange 26 made from the polymeric material, the bumper 16 isolates noise and dampens vibrations from the coil spring 28. Because the overmolded mounting flange 26 is less compressible than the bumper 16, the overmolded mounting flange 26 has sufficient rigidity to maintain the coil spring 28 in position relative to the coil spring 28 isolators.

In the embodiment shown in Figure 3, the bumper 16 presents the ring-shaped configuration defining the inner diameter 20 and the outer diameter 22. A support element 36 may extend from the overmolded mounting flange 26. Typically, the support element 36 also comprises the polymeric material. As such, the support element 36 may be integrally formed with the overmolded mounting flange 26. The support element 36 integrally extends from the overmolded mounting flange 26 and is disposed within the inner diameter 20 of the body portion 18 of the bumper 16. The support element 36 may act as an additional cushion or the support element 36 may receive a jounce bumper 38. More specifically, the jounce bumper 38 may be coupled to the support element 36 such that the jounce bumper 38 is partially disposed within the inner diameter 20 of the body portion 18 of the bumper 16 with the jounce bumper 38 extending from the bumper 16. Therefore, the jounce bumper 38 can contact components of the suspension system to further aid in minimizing the transfer of the impact force from the wheels to the frame of the vehicle.

When the dampening device 10 includes the support element 36, the method further comprises the step of forming the polymeric material into the support element 36, which integrally extends from the overmolded mounting flange 26 and is disposed within the inner diameter 20 of the body portion 18 of the bumper 16. The method may also include the step of coupling a jounce bumper 38 to the support element 36.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of making a dampening device (10) for a suspension system of a vehicle, said method comprising the steps of:
providing a bumper (16) comprising a microcellular polyurethane and having a body portion having a receiving surface (24) and a contact surface (30) opposite the receiving surface with the bumper (16) presents a ring-shaped configuration defining an inner diameter and an outer diameter;
placing the bumper (16) into a mold;
preparing a receiving surface (24) of the bumper; injecting a polymeric material into the mold and over the receiving surface (24) of the bumper (16) to form an overmolded mounting flange (26) coupled to the bumper (16) thereby making the dampening device;
releasing the dampening device (10) from the mold; and forming the polymeric material into a support element (36) integrally extending from the overmolded mounting flange (26) and disposed within the inner diameter of the body portion of the bumper;
wherein the step of preparing the receiving surface (24) of the bumper (16) is further defined as removing a skin or a portion of the bumper (16) to expose cells of the bumper (16) at the receiving surface.

2. A method as set forth in claim 1 further comprising the step of coupling a jounce bumper (38) to the support element.

3. A method as set forth in claim 1 wherein the step of preparing the receiving surface (24) of the bumper (16) is further defined as machining the bumper (16) to provide the receiving surface (24) of the bumper.

4. A method as set forth in claim 1 further comprising the step of cutting the bumper (16) to provide the receiving surface.

5. A method as set forth in claim 1 wherein the polymeric material is selected from the group of thermoplastic materials, thermoset materials, engineered plastics, and combinations thereof.

6. A dampening device for a suspension system of a vehicle, the dampening device (10) being obtainable by a method according to any of claims 1 to 5, with the suspension system including a first component and a second component spaced from the first component and moveable toward the first component, said dampening device comprising:
a bumper (16) comprising a microcellular polyurethane and having a body portion having
a receiving surface (24) and a contact surface (30) opposite said receiving surface (24) with said
contact surface (30) adapted to contact the second component of the suspension system;
an overmolded mounting flange (26) comprising polymeric material and coupled directly to the receiving surface (24) of said bumper opposite said contact surface of said bumper; and
wherein the bumper (16) presents a ring shaped configuration defining an inner diameter and an outer diameter with a support element (36) comprising polymeric material and integrally extending from the overmolded mounting flange (26) and disposed within the inner diameter of the body portion of the bumper.

7. A dampening device (10) as set forth in claim 6 wherein said receiving surface (24) of said bumper (16) is free of adhesive between said bumper (16) and said overmolded mounting flange.

8. A dampening device (10) as set forth in claim 6 further comprising a jounce bumper (38) coupled to and extending from the support element.

9. A dampening device (10) as set forth in claim 6 wherein the polymeric material is selected from the group of thermoplastic materials, thermoset materials, engineered plastics, and combinations thereof.

## Patentansprüche

1. Verfahren zum Herstellen einer Dämpfungsvorrichtung (10) für ein Aufhängungssystem eines Fahrzeugs, wobei das Verfahren die folgenden Schritte umfasst:
Bereitstellen einer Stoßstange (16), die ein mikrozelluläres Polyurethan umfasst und einen Körperabschnitt aufweist, der eine Aufnahmeoberfläche (24) und eine Berührungsoberfläche (30) gegenüber der Aufnahmeoberfläche aufweist, wobei die Stoßstange (16) eine ringförmige Konfiguration präsentiert, die einen Innendurchmesser und einen Außendurchmesser definiert;
Platzieren der Stoßstange (16) in einer Form;
Vorbereiten einer Aufnahmeoberfläche (24) der Stoßstange;
Einspritzen eines Polymermaterials in die Form und über die Aufnahmeoberfläche (24) der Stoßstange (16), um einen umspritzten Montageflansch (26) auszubilden, der mit der Stoßstange (16) gekoppelt ist, wobei dadurch die Dämpfungsvorrichtung hergestellt wird;
Lösen der Dämpfungsvorrichtung (10) aus der Form; und
Ausbilden des Polymermaterials zu einem Stützelement (36), das sich aus dem umspritzten Montageflansch (26) integral erstreckt und innerhalb des Innendurchmessers des Körperabschnitts der Stoßstange angeordnet ist;
wobei der Schritt des Vorbereitens der Aufnahmeoberfläche (24) der Stoßstange (16) ferner als ein Entfernen einer Haut oder eines Abschnitts der Stoßstange (16) definiert ist, um Zellen der Stoßstange (16) an der Aufnahmeoberfläche freizulegen.

2. Verfahren nach Anspruch 1, das ferner den Schritt des Koppelns eines Einfederungsanschlags (38) an das Stützelement umfasst.

3. Verfahren nach Anspruch 1, wobei der Schritt des Vorbereitens der Aufnahmeoberfläche (24) der Stoßstange (16) ferner als ein Bearbeiten der Stoßstange (16) definiert ist, um die Aufnahmeoberfläche (24) der Stoßstange bereitzustellen.

4. Verfahren nach Anspruch 1, das ferner den Schritt eines Schneidens der Stoßstange (16) umfasst, um die Aufnahmeoberfläche bereitzustellen.

5. Verfahren nach Anspruch 1, wobei das Polymermaterial aus der Gruppe von thermoplastischen Materialien, duroplastischen Materialien, technischen Kunststoffen und Kombinationen davon ausgewählt ist.

6. Dämpfungsvorrichtung für ein Aufhängungssystem eines Fahrzeugs, wobei die Dämpfungsvorrichtung (10) durch ein Verfahren nach einem der Ansprüche 1 bis 5 erhältlich ist, wobei das Aufhängungssystem eine erste Komponente und eine zweite Komponente beinhaltet, die von der ersten Komponente beabstandet und in Richtung der ersten Komponente bewegbar ist, wobei die Dämpfungsvorrichtung Folgendes umfasst:
eine Stoßstange (16), die ein mikrozelluläres Polyurethan umfasst und einen Körperabschnitt aufweist, der eine Aufnahmeoberfläche (24) und eine Berührungsoberfläche (30) gegenüber der Aufnahmeoberfläche (24) aufweist, wobei die Berührungsoberfläche (30) angepasst ist, um die zweite Komponente des Aufhängungssystems zu berühren;
einen umspritzten Montageflansch (26), der ein Polymermaterial umfasst und mit der Aufnahmeoberfläche (24) der Stoßstange gegenüber der Berührungsoberfläche der Stoßstange direkt gekoppelt ist; und
wobei die Stoßstange (16) eine ringförmige Konfiguration präsentiert, die einen Innendurchmesser und einen Außendurchmesser definiert, wobei ein Stützelement (36) ein Polymermaterial umfasst und sich aus dem umspritzten Montageflansch (26) integral erstreckt und innerhalb des Innendurchmessers des Körperabschnitts der Stoßstange angeordnet ist.

7. Dämpfungsvorrichtung (10) nach Anspruch 6, wobei die Aufnahmeoberfläche (24) der Stoßstange (16) zwischen der Stoßstange (16) und dem umspritzten Montageflansch frei von Klebstoff ist.

8. Dämpfungsvorrichtung (10) nach Anspruch 6, die ferner einen Einfederungsanschlag (38) umfasst, der mit dem Stützelement gekoppelt ist und sich aus diesem erstreckt.

9. Dämpfungsvorrichtung (10) nach Anspruch 6, wobei das Polymermaterial aus der Gruppe von thermoplastischen Materialien, duroplastischen Materialien, technischen Kunststoffen und Kombinationen davon ausgewählt ist.

## Revendications

1. Procédé de fabrication d'un dispositif d'amortissement (10) pour un système de suspension d'un véhicule, ledit procédé comprenant les étapes consistant à :
fournir un pare-chocs (16) comprenant un polyuréthane microcellulaire et comportant une partie de corps présentant une surface de réception (24) et une surface de contact (30) opposée à la surface de réception, le pare-chocs (16) présentant une configuration en forme d'anneau définissant un diamètre intérieur et un diamètre extérieur ;
placer le pare-chocs (16) dans un moule ;
préparer une surface de réception (24) du pare-chocs ;
injecter un matériau polymère dans le moule et sur la surface de réception (24) du pare-chocs (16) pour former une bride de montage surmoulée (26) accouplée au pare-chocs (16), ce qui permet de fabriquer le dispositif d'amortissement ;
démouler le dispositif d'amortissement (10) ; et
former le matériau polymère en un élément de support (36) s'étendant intégralement depuis la bride de montage surmoulée (26) et disposé à l'intérieur du diamètre intérieur de la partie corps du pare-chocs ;
l'étape de préparation de la surface de réception (24) du pare-chocs (16) est en outre définie comme le retrait d'un revêtement ou d'une partie du pare-chocs (16) pour exposer les cellules du pare-chocs (16) au niveau de la surface de réception.

2. Procédé selon la revendication 1, comprenant en outre l'étape d'accouplement d'un pare-chocs anti-secousses (38) à l'élément de support.

3. Procédé selon la revendication 1, dans lequel l'étape de préparation de la surface de réception (24) du pare-chocs (16) est en outre définie comme l'usinage du pare-chocs (16) pour fournir la surface de réception (24) du pare-chocs.

4. Procédé selon la revendication 1, comprenant en outre l'étape de découpe du pare-chocs (16) pour fournir la surface de réception.

5. Procédé selon la revendication 1, dans lequel le matériau polymère est choisi dans le groupe des matériaux thermoplastiques, des matériaux thermodurcissables, des plastiques techniques et des combinaisons de ceux-ci.

6. Dispositif d'amortissement pour un système de suspension d'un véhicule, le dispositif d'amortissement (10) pouvant être obtenu par un procédé selon l'une quelconque des revendications 1 à 5, le système de suspension comportant un premier composant et un second composant espacé du premier composant et mobile vers le premier composant, ledit dispositif d'amortissement comprenant :
un pare-chocs (16) comprenant un polyuréthane microcellulaire et comportant une partie de corps présentant une surface de réception (24) et une surface de contact (30) opposée à ladite surface de réception (24), ladite surface de contact (30) étant adaptée pour entrer en contact avec le second composant du système de suspension ;
une bride de montage surmoulée (26) comprenant un matériau polymère et accouplée directement à la surface de réception (24) dudit pare-chocs, opposée à ladite surface de contact dudit pare-chocs ; et
le pare-chocs (16) présentant une configuration en forme d'anneau définissant un diamètre intérieur et un diamètre extérieur au moyen d'un élément de support (36) comprenant un matériau polymère et s'étendant intégralement depuis la bride de montage surmoulée (26) et disposé dans le diamètre intérieur de la partie corps du pare-chocs.

7. Dispositif d'amortissement (10) selon la revendication 6, dans lequel ladite surface de réception (24) dudit pare-chocs (16) est exempte d'adhésif entre ledit pare-chocs (16) et ladite bride de montage surmoulée.

8. Dispositif d'amortissement (10) selon la revendication 6, comprenant en outre un pare-chocs anti-secousses (38) accouplé à l'élément de support et s'étendant depuis celui-ci.

9. Dispositif d'amortissement (10) selon la revendication 6, dans lequel le matériau polymère est choisi dans le groupe des matériaux thermoplastiques, des matériaux thermodurcissables, des plastiques techniques et des combinaisons de ceux-ci.
